# EUROPEAN PATENT APPLICATION

(11) **EP 4 760 123 A1**
(43) Date of publication of application: **17.06.2026**
(21) Application number: 24219983.4
(22) Date of filing: 13.12.2024
(51) Int. Cl.: F16D 41/064

(54) **MECHANICAL STOP SYSTEM**

(71) Applicant: Microtecnica S.r.l., 10126 Turin (IT)
(72) Inventor: MORNACCHI, Andrea, 10126 Torino (IT); QUAGLIA, Enrico, 10023 Chieri, Torino (IT); SAVINO, Dario, 13040 Palazzolo Vercellese (IT)
(74) Representative: Casalonga

(57) **Abstract**

A mechanical stop system (1) of a power delivery system in an aircraft, the mechanical stop system (1) including an input shaft (2), a plurality of rotating members (6), wherein the input shaft (2) comprises an input engaging portion (4) and wherein each of the plurality of rotating members (6) is arranged to rotate about the input shaft (2). The plurality of rotating members (6) include a proximal rotating member (8) arranged proximal to the input engaging portion (4) and a distal rotating member (10) arranged distal from the input engaging portion (4). Each of the plurality of rotating members (6) includes an engaging portion (7). The mechanical stop system (1) includes a fixed member (14). The input shaft (2) is arranged to be prevented from rotating in a first direction when the engaging portion (7) of the distal rotating member (10) is engaged with the fixed member (14).

## Description

### FIELD

The examples described herein relate to a mechanical stop system of an aircraft, in particular to a mechanical stop system including a fixed member that is arranged to prevent the rotation of an input shaft.

### BACKGROUND

Mechanical stop systems are designed to regulate the actuation of a component and may be used in a power delivery system of an aircraft. During operation of a mechanical stop system where an input shaft of the power delivery system rotates, the mechanical stop system may prevent an actuated component from extending, contracting or rotating beyond an intended range of motion.

It is desired to provide an improved mechanical stop system that has a reliable behaviour when preventing a component of the component from actuating beyond the intended range of motion.

### SUMMARY

The present disclosure provides a mechanical stop system of a power delivery system in an aircraft, wherein the mechanical stop system comprises:
an input shaft;
wherein the input shaft is arranged to rotate about a longitudinal axis;
wherein the input shaft comprises an input engaging portion;
   wherein the input engaging portion extends radially from the input shaft;

wherein the mechanical stop system further comprises:
   a plurality of rotating members;
   wherein each of the plurality of rotating members is arranged to rotate about the input shaft;
   wherein the plurality of rotating members are axially spaced along the input shaft;
   wherein the plurality of rotating members comprises:
      a proximal rotating member arranged proximal to the input engaging portion;
      a distal rotating member arranged distal from the input engaging portion;
   wherein each of the plurality of rotating members comprises:
      an engaging portion;
         wherein the engaging portion extends radially from the rotating member;
         wherein the engaging portion of the rotating member is arranged to axially overlap with the engaging portion of a respective adjacent rotating member;
wherein the mechanical stop system further comprises:
   a fixed member;
      wherein the fixed member is arranged distal from the input engaging portion;
      wherein the fixed member is arranged to axially overlap with the engaging portion of the distal rotating member;
   wherein the input engaging portion is arranged to engage with the engaging portion of the proximal rotating member and rotate the proximal rotating member in a first direction, when the input shaft rotates in the first direction;
   wherein the engaging portion of the proximal rotating member is arranged to engage with the engaging portion of the distal rotating member, when the proximal rotating member rotates in the first direction;
   wherein the input shaft is arranged to be prevented from rotating in the first direction when:
      i. the input engaging portion is engaged with the engaging portion of the proximal rotating member;
      ii. the engaging portion of the proximal rotating member is engaged with the engaging portion of the distal rotating member; and
      iii. the engaging portion of the distal rotating member is engaged with the fixed member.

The present disclosure provides a method of operating a mechanical stop system of a power delivery system of an aircraft, the mechanical stop system comprising:
an input shaft;
wherein the input shaft is arranged to rotate about a longitudinal axis;
wherein the input shaft comprises an input engaging portion;
   wherein the input engaging portion extends radially from the input shaft;

wherein the mechanical stop system further comprises:
   a plurality of rotating members;
   wherein each of the plurality of rotating members is arranged to rotate about the input shaft;
   wherein the plurality of rotating members are axially spaced along the input shaft;
   wherein the plurality of rotating members comprises:
      a proximal rotating member arranged proximal to the input engaging portion;
      a distal rotating member arranged distal from the input engaging portion;
   wherein each of the plurality of rotating members comprises:
      an engaging portion;
      wherein the engaging portion extends radially from the rotating member;
      wherein the engaging portion of the rotating member is arranged to axially overlap with the engaging portion of a respective adjacent rotating member;
wherein the mechanical stop system further comprises:
   a fixed member;
   wherein the fixed member is arranged distal from the input engaging portion;
   wherein the fixed member is arranged to axially overlap with the engaging portion of the distal rotating member;
wherein the method comprises:
   rotating the input shaft about the longitudinal axis in a first direction;
   engaging the input engaging portion with the engaging portion of the proximal rotating member and rotating the proximal rotating member in the first direction;
   engaging the engaging portion of the proximal rotating member with the engaging portion of the distal rotating member, when the proximal rotating member is rotating in the first direction;
   preventing the input shaft from rotating in the first direction when:
      i. the input engaging portion is engaged with the engaging portion of the proximal rotating member;
      ii. the engaging portion of the proximal rotating member is engaged with the engaging portion of the distal rotating member; and
      iii. the engaging portion of the distal rotating member is engaged with the fixed member.

It will be appreciated that all of the features described herein relating to the mechanical stop system apply equally to the method for operating the mechanical stop system, and vice versa.

By arranging the engaging portions of the plurality of rotating members to axially overlap and the input engaging portion to overlap with engaging portion of the proximal rotating member, rotation of the input shaft may be transferred from the proximal rotating member to the distal rotating member when the input shaft rotates.

In some examples, a proximal direction is parallel to the longitudinal axis and in the direction from the fixed member to the input engaging portion. In some examples, a distal direction is parallel to the longitudinal axis and in the direction from the input engaging portion to the fixed member.

In some examples, the input shaft is arranged to rotate in a second direction about the longitudinal axis. In some examples, the second direction is opposite to the first direction. In some examples, the input engaging portion is arranged to engage with the engaging portion of the proximal rotating member and rotate the proximal rotating member in the second direction, when the input shaft rotates in the second direction.

In some examples, the engaging portion of the proximal rotating member is arranged to engage with the engaging portion of the distal rotating member, when the proximal rotating member rotates in the second direction.

In some examples, the input shaft is arranged to be prevented from rotating in the second direction when:
iv. the input engaging portion is engaged with the engaging portion of the proximal rotating member;
v. the engaging portion of the proximal rotating member is engaged with the engaging portion of the distal rotating member; and
vi. the engaging portion of the distal rotating member is engaged with the fixed member.

In some examples, the plurality of rotating members comprises at least one intermediate rotating member. In some examples, the at least one intermediate rotating member is axially (e.g. located along the longitudinal axis) between the proximal rotating member and the distal rotating member. In some examples, each of the plurality of rotating members is flush with at least one respective adjacent rotating member along the longitudinal axis.

In some examples, each of the plurality of rotating members has a substantially annular cross section, orthogonal to the longitudinal axis. In some examples, each of the plurality of rotating members is substantially cylindrical. In some examples, each of the plurality of rotating members is coaxial with the longitudinal axis. In some examples, each of the plurality of rotating members has a first distance. In some examples, the first distance is the axial length (e.g. the distance in a direction parallel to the longitudinal axis) that each respective rotating member extends.

In some examples, the engaging portion extends over a first dimension in a direction circumferential to the longitudinal axis. In some examples, the engaging portion extends over a second distance in a direction parallel to the longitudinal axis.

In some examples, the engaging portion projects (e.g. from the respective rotating member) in the proximal direction. In some examples, the engaging portion projects (e.g. from the respective rotating member) in the distal direction.

In some examples, the engaging portion overlaps axially with the engaging portion of a respective adjacent rotating member by a distance of approximately the first distance. In some examples, the second distance is approximately twice the first distance.

By setting the first dimension, the distance over which a respective rotating member rotates before engaging with a respective adjacent rotating member may be set. By arranging the second distance at approximately twice the first distance, the engaging portions of respective adjacent rotating members may overlap to transfer the rotation of the input shaft. By arranging the engaging portion of each respective rotating member to axially overlap with the engaging portion of a respective adjacent rotating member the respective rotating member and the respective adjacent rotating member may engage.

In some examples, the engaging portion of each respective rotating member comprises a first abutting face and a second abutting face. In some examples, the first abutting face is substantially planar. In some examples, the first abutting face extends in a radial direction and an axial direction. In some examples, the second abutting face is substantially planar. In some examples, the second abutting face extends in a radial direction and an axial direction.

It will be appreciated that as the engaging portions of the plurality of rotating members rotate during operation, the first abutting face and the second abutting face may also rotate. Whilst the first abutting face and the second abutting face may always extend in a radial direction and an axial direction, the first abutting face and the second abutting face are not fixed to particular planes, owing to the rotation of their respective engaging portion.

In some examples, the first abutting face and the second abutting face are separated circumferentially about the longitudinal axis by the first dimension. In some examples, the first abutting face and the second abutting face are arranged at circumferentially opposite ends of the engaging portion. In some examples, each abutting face (e.g. the first abutting face) of an engaging portion of each respective rotating member is arranged to engage with a respective opposite abutting face (e.g. the second abutting face) of an engaging portion of a respective adjacent rotating member.

By engaging the first abutting face of the engaging member of a respective rotating member with the second abutting face of the engaging portion of a respective adjacent rotating member, the engaging portion of the respective rotating member may engage with the engaging portion of the respective adjacent rotating member (e.g. the engaging portion of the respective rotating member may be circumferentially adjacent to the engaging portion of the respective adjacent rotating member).

Thus, by engaging the first abutting face of the engaging member of a respective rotating member with the second abutting face of the engaging portion of a respective adjacent rotating member, rotation of the input shaft in the first direction may be transferred to the plurality of rotating members. By engaging the first abutting face of the engaging member of a respective rotating member with the second abutting face of the engaging portion of a respective adjacent rotating member, rotation of the input shaft in the second direction may be transferred to the plurality of rotating members.

In some examples, the input engaging portion extends radially from the input shaft over a third dimension in a direction circumferential to the longitudinal axis. In some examples, the input engaging portion projects in the distal direction to overlap with the proximal rotating member, e.g. by a length of approximately the first distance. In some examples, the input engaging portion projects in the distal direction to overlap with the engaging portion of the proximal rotating member, e.g. by a length of approximately the first distance. By arranging the input engaging portion to project in the distal direction to overlap with the engaging portion of the proximal rotating member, rotation from the input shaft may be transferred to the proximal rotating member.

In some examples, the input engaging portion comprises a third abutting face and a fourth abutting face. In some examples, the third abutting face is substantially planar. In some examples, the third abutting face extends in a radial direction and an axial direction. In some examples, the fourth abutting face is substantially planar. In some examples, the fourth abutting face extends in a radial direction and an axial direction.

It will be appreciated that as the input engaging portion rotates during operation, the third abutting face and the fourth abutting face may also rotate. Whilst the third abutting face and the fourth abutting face may always extend in a radial direction and an axial direction, the third abutting face and the fourth abutting face are not fixed to particular planes, owing to the rotation of the input engaging portion.

In some examples, the third abutting face and the fourth abutting face are arranged at circumferentially opposite ends of the input engaging portion. In some examples, the third abutting face of the input engaging portion is arranged to engage with the first abutting face of the engaging portion of the proximal rotating member, when the input shaft rotates in the first direction. In some examples, the fourth abutting face of the input engaging portion is arranged to engage with the second abutting face of the engaging portion of a respective adjacent rotating member, when the input shaft rotates in the second direction.

By engaging the third abutting face with the first abutting face of the proximal rotating member, the input engaging portion may engage with the proximal rotating member engaging portion (e.g. the input engaging portion may be circumferentially adjacent to the engaging portion of the proximal rotating member). By engaging the fourth abutting face with the second abutting face of the proximal rotating member, the input engaging portion may engage with the proximal rotating member engaging portion (e.g. the input engaging portion may be circumferentially adjacent to the engaging portion of the proximal rotating member).

Thus, by engaging the third abutting face of the input engaging portion with the first abutting face of the engaging portion of the proximal rotating member, rotation of the input shaft in the first direction may be transferred to the plurality of rotating members. By engaging the fourth abutting face of the input engaging portion with the second abutting face of the engaging portion of the proximal rotating member, rotation of the input shaft in the second direction may be transferred to the plurality of rotating members.

In some examples, the fixed member projects in the proximal direction to overlap with the distal rotating member, e.g. by a length of approximately the first distance. In some examples, the fixed member projects in the proximal direction to overlap with the distal rotating member, e.g. by a length of approximately the first distance. By arranging the fixed member to project in the proximal direction to overlap with engaging portion of the distal rotating member, rotation of the input shaft may be prevented.

In some examples, the fixed member comprises a fifth abutting face and a sixth abutting face. In some examples, the fifth abutting face and the sixth abutting face are separated circumferentially about the longitudinal axis by a fifth dimension. In some examples, the fifth abutting face is substantially planar. In some examples, the fifth abutting face extends in a radial direction and an axial direction. In some examples, the sixth abutting face is substantially planar. In some examples, the sixth abutting face extends in a radial direction and an axial direction.

In some examples, the fifth abutting face and the sixth abutting face are arranged at circumferentially opposite ends of the fixed member. In some examples, the fifth abutting face is arranged to engage with the second abutting face of the distal rotating member, when the input shaft rotates in the first direction. In some examples, the sixth abutting face is arranged to engage with the first abutting face of the distal rotating member, when the input shaft rotates in the second direction.

By engaging the fifth abutting member with the second abutting member of the distal rotating member, the fixed member may engage with the engaging portion of the distal rotating member (e.g. the fixed member may be circumferentially adjacent to the engaging portion of the distal rotating member). By engaging the sixth abutting member with the first abutting member of the distal rotating member, the fixed member may engage with the engaging portion of the distal rotating member (e.g. the fixed member may be circumferentially adjacent to the engaging portion of the distal rotating member).

Thus, by engaging the fifth abutting member with the second abutting member of the distal rotating member when the input shaft rotates in the first direction, the input shaft may be prevented from rotating further in the first direction. By engaging the sixth abutting member with the first abutting member of the distal rotating member when the input shaft rotates in the second direction, the input shaft may be prevented from rotating further in the second direction.

In some examples, rotation of the input shaft is arranged to be transmitted directly from the proximal rotating member to the distal rotating member (e.g. via the engaging portions engaging). For example, the engaging portion of the proximal rotating member may directly contact the engaging portion of the distal rotating member to transmit the rotation of the input shaft.

In some examples, the rotation of the input shaft is arranged to be transmitted indirectly (e.g. via the at least one intermediate rotating member) from the proximal rotating member to the distal rotating member (e.g. via the engaging portions engaging).

For example, the engaging portion of the proximal rotating member may be arranged to directly contact the engaging portion of one of the at least one intermediate rotating member, and the engaging portion of one of the at least one intermediate rotating member be arranged to directly contact with the engaging portion of the distal rotating member, to transmit the rotation of the input shaft.

In some examples, the third abutting face of the input engaging portion is arranged to engage with the first abutting face of the proximal rotating member, when the input shaft rotates in the first direction. In some examples, the second abutting face of the proximal rotating member is arranged to engage with the first abutting face of the respective adjacent intermediate rotating member when the input shaft rotates in the first direction.

In some examples, the second abutting face of each of the at least one intermediate rotating member is arranged to engage with the first abutting face of the respective adjacent rotating member in the distal direction, when the input shaft rotates in the first direction. In some examples, the second abutting face of the distal rotating member is arranged to engage with the fifth abutting face of the fixed member, when the input shaft rotates in the first direction.

In some examples, the fourth abutting face of the input engaging portion is arranged to engage with the second abutting face of the proximal rotating member, when the input shaft rotates in the second direction. In some examples, the first abutting face of the proximal rotating member is arranged to engage with the second abutting face of the respective adjacent intermediate rotating member, when the input shaft rotates in the second direction.

In some examples, the first abutting face of each of the at least one intermediate rotating member is arranged to engage with the second abutting face of the respective adjacent rotating member in the distal direction, when the input shaft rotates in the second direction. In some examples, the first abutting face of the distal rotating member is arranged to engage with the sixth abutting face of the fixed member, when the input shaft rotates in the second direction.

In some examples, the fixed member is coupled to a regulating component. In some examples, the regulating component is arranged to vary the position of the fixed member in a direction circumferential to the input shaft (e.g. relative to the input engaging portion). By arranging the regulating component to vary the position of the fixed member, the rotation of the input shaft at which the engaging portion of the distal rotating member engages with the fixed member may be varied.

In some examples, the fixed member is arranged to prevent the rotation of the input shaft beyond a first operating limit. In some examples, the first operating limit is the maximum rotation of the input shaft in the first direction before the fixed member prevents rotation of the input shaft. In some examples, the regulating component is arranged to vary the first operating limit.

In some examples, the fixed member is arranged to prevent the rotation of the input shaft beyond a second operating limit. In some examples, the second operating limit is the maximum rotation of the input shaft in the second direction before the fixed member prevents the rotation of the input shaft. In some examples, the regulating component is arranged to vary the second operating limit.

In some examples, the regulating component comprises a regulating member and a movable member. In some examples, the regulating member and the movable member engage in a worm gear arrangement. In some examples, the movable member comprises a worm wheel. In some examples, the regulating member comprises a worm. In some examples, the movable member is fixedly coupled to the fixed member.

In some examples, the movable member is arranged to vary the position of the fixed member in a direction circumferential to the input shaft. In some examples, regulating member is arranged to be actuated to vary the position of the fixed member (e.g. via the movable member) in a direction circumferential to the input shaft (e.g. in the first direction or the second direction). In some examples, the regulating member is arranged to be actuated to vary the position of the movable member in a direction circumferential to the input shaft (e.g. in the first direction or the second direction). In some examples, actuation of the regulating member comprises rotation of the regulating member.

In some examples, the mechanical stop system is implemented in a power delivery system. In some examples, the power delivery system comprises a power drive unit, at least one actuator and the input shaft. In some examples, the power drive unit is arranged to drive the input shaft.

In some examples, the at least one actuator is arranged to actuate at least one component of a steering system of the aircraft. In some examples, the at least one component of a steering system may be any number of flaps, ailerons, elevators, rudder movable surfaces in any combination. By arranging the mechanical stop system in a power delivery system, the actuation of the at least one actuator may be controlled.

In some examples, the mechanical stop system is arranged to prevent the actuation of the at least one actuator beyond a third operating limit. In some examples, the third operating limit is the position of the at least one actuator when the mechanical stop system prevents rotation of the input shaft in the first direction. In some examples, the first operating limit and third operating limit are at the same rotation of the input shaft in the first direction.

In some examples, the mechanical stop system is arranged to prevent the actuation of the at least one actuator beyond a fourth operating limit. In some examples, the fourth operating limit is the position of the at least one actuator when the mechanical stop system prevents rotation of the input shaft in the second direction. In some examples, the second operating limit and the fourth operating limit are at the same rotation of the input shaft in the second direction.

In some examples, the at least one actuator is arranged to be actuated between the third operating limit and the fourth operating limit.

The present disclosure provides a power delivery system of an aircraft, wherein the power delivery system comprises:
a power drive unit;
wherein the power drive unit is arranged to drive an input shaft;
wherein the input shaft is arranged to rotate about a longitudinal axis;

wherein the power delivery system further comprises:
   at least one actuator;
   wherein the input shaft is arranged to actuate the at least one actuator;
   wherein the at least one actuator is arranged to actuate at least one component of a steering system of the aircraft; and
wherein the power delivery system further comprises:
   a mechanical stop system;
   wherein the mechanical stop system comprises:
      the input shaft of the power delivery system;
      wherein the input shaft comprises an input engaging portion;
      wherein the input engaging portion extends radially from the input shaft;
   wherein the mechanical stop system further comprises:
      a plurality of rotating members;
      wherein each of the plurality of rotating members is arranged to rotate about the input shaft;
      wherein the plurality of rotating members are axially spaced along the input shaft;
      wherein the plurality of rotating members comprises:
         a proximal rotating member arranged proximal to the input engaging portion;
         a distal rotating member arranged distal from the input engaging portion;
      wherein each of the plurality of rotating members comprises:
         an engaging portion;
         wherein the engaging portion extends radially from the rotating member;
         wherein the engaging portion of the rotating member is arranged to axially overlap with the engaging portion of a respective adjacent rotating member;
   wherein the mechanical stop system further comprises:
      a fixed member;
         wherein the fixed member is arranged distal from the input engaging portion;
         wherein the fixed member is arranged to axially overlap with the engaging portion of the distal rotating member;
      wherein the input engaging portion is arranged to engage with the engaging portion of the proximal rotating member and rotate the proximal rotating member in a first direction, when the input shaft rotates in the first direction;
      wherein the engaging portion of the proximal rotating member is arranged to engage with the engaging portion of the distal rotating member, when the proximal rotating member rotates in the first direction;
      wherein the input shaft is arranged to be prevented from rotating in the first direction when:
         i. the input engaging portion is engaged with the engaging portion of the proximal rotating member;
         ii. the engaging portion of the proximal rotating member is engaged with the engaging portion of the distal rotating member; and
         iii. the engaging portion of the distal rotating member is engaged with the fixed member.

The present disclosure provides a method for operating power delivery system of an aircraft, the power delivery system comprising:
a power drive unit;
an input shaft;
   wherein the input shaft is arranged to rotate about a longitudinal axis;
at least one actuator; and
a mechanical stop system;
   wherein the mechanical stop system comprises:
      the input shaft of the power delivery system;
      wherein the input shaft comprises an input engaging portion;
      wherein the input engaging portion extends radially from the input shaft;
   wherein the mechanical stop system further comprises:
      a plurality of rotating members;
      wherein each of the plurality of rotating members is arranged to rotate about the input shaft;
      wherein the plurality of rotating members are axially spaced along the input shaft;
      wherein the plurality of rotating members comprises:
         a proximal rotating member arranged proximal to the input engaging portion;
         a distal rotating member arranged distal from the input engaging portion;
      wherein each of the plurality of rotating members comprises:
         an engaging portion;
         wherein the engaging portion extends radially from the rotating member;
         wherein the engaging portion of the rotating member is arranged to axially overlap with the engaging portion of a respective adjacent rotating member;
   wherein the mechanical stop system further comprises:
      a fixed member;
      wherein the fixed member is arranged distal from the input engaging portion;
      wherein the fixed member is arranged to axially overlap with the engaging portion of the distal rotating member;
wherein the method comprises:
   driving an input shaft with the power delivery unit to rotate about the longitudinal axis in a first direction;
   actuating the at least one actuator with the input shaft;
   actuating at least one component of a steering system of the aircraft with the at least one actuator;
   engaging the input engaging portion with the engaging portion of the proximal rotating member and rotating the proximal rotating member in the first direction;
   engaging the engaging portion of the proximal rotating member with the engaging portion of the distal rotating member when the proximal rotating member is rotating in the first direction;
   preventing the input shaft from rotating in the first direction when:
      i. the input engaging portion is engaged with the engaging portion of the proximal rotating member;
      ii. the engaging portion of the proximal rotating member is engaged with the engaging portion of the distal rotating member; and
      iii. the engaging portion of the distal rotating member is engaged with the fixed member.

It will be appreciated that all of the features described herein relating to the power delivery system apply equally to the method for operating the power delivery system, and vice versa. It will be appreciated that the features described herein relating to the mechanical stop system apply equally to the power delivery system.

By arranging the mechanical stop on the input shaft, the input shaft may be prevented from rotating and torque may be prevented from being provided to the at least one actuator. By arranging the mechanical stop on the input shaft, all of the at least one actuator may be prevented from receiving a torque at the same rotation of the input shaft. By arranging the mechanical stop on the input shaft, all of the at least one actuator may be prevented from actuating at the same rotation of the input shaft.

In some examples, the mechanical stop system is arranged on the low torque side of the power delivery system. In some examples, the mechanical stop system is arranged to prevent the transfer of power from the power delivery unit to the at least one actuator via the input shaft. For example, the mechanical stop system provides a means for preventing the transfer of power from the power delivery unit to all of the at least one actuator via the input shaft. By preventing the rotation of the input shaft, the mechanical stop system may prevent the actuation of all of the at least one actuator (e.g. may prevent actuation of the at least one actuator globally).

In some examples, the mechanical stop system is arranged to prevent the actuation of the at least one actuator beyond a third operating limit. In some examples, the third operating limit is the maximum rotation of the input shaft in the first direction before the mechanical stop system prevents rotation of the input shaft and actuation of the at least one actuator. In some examples, the first operating limit and third operating limit are at the same rotation of the input shaft in the first direction.

In some examples, the mechanical stop system is arranged to prevent the actuation of the at least one actuator beyond a fourth operating limit. In some examples, the fourth operating limit is the maximum rotation of the input shaft in the second direction before the mechanical stop system prevents rotation of the input shaft and actuation of the at least one actuator. In some examples, the second operating limit and the fourth operating limit are at the same rotation of the input shaft in the second direction.

In some examples, the at least one actuator is arranged to be actuated between the third operating limit and the fourth operating limit.

### BRIEF DESCRIPTION OF INVENTION

One or more non-limiting examples will now be described, by way of example only, and with reference to the accompanying figures in which:
Figure 1 shows a cross-sectional view of a mechanical stop system;
Figure 2 shows a perspective view of a mechanical stop system;
Figure 3 shows a flow chart for the operation of a mechanical stop;
Figure 4 shows a schematic view of a power delivery system; and
Figure 5 shows a flow chart for the operation of a power delivery system.

### DETAILED DESCRIPTION

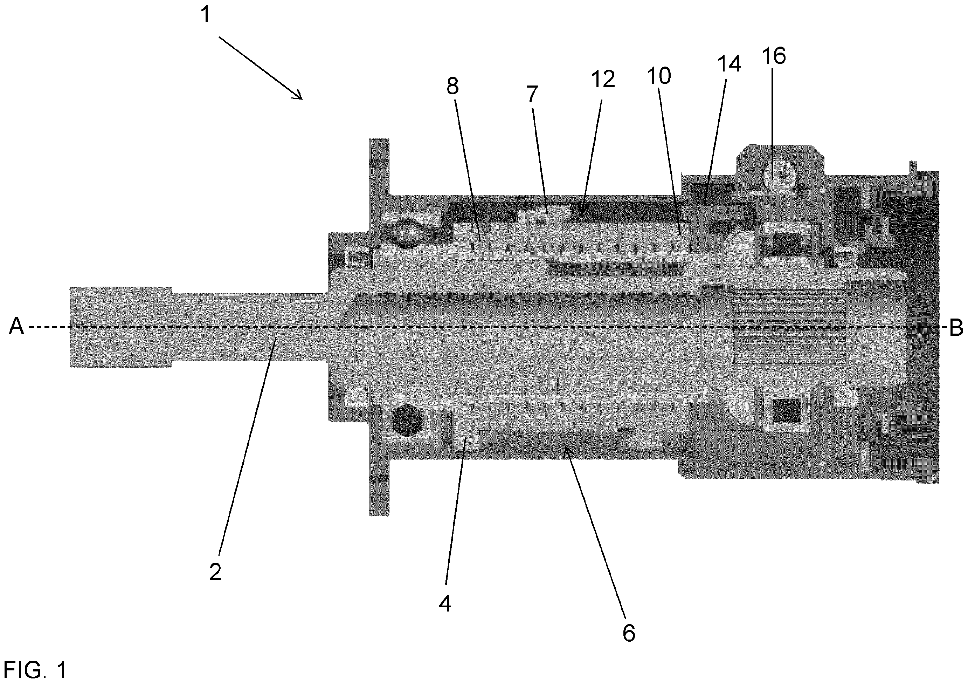

Figure 1 shows a cross-sectional view of a mechanical stop system 1.

The mechanical stop system 1 has an input shaft 2 arranged to be driven by a power delivery unit of an aircraft. The input shaft 2 is coaxial with a longitudinal axis A-B and is arranged to rotate about the longitudinal axis A-B. The input shaft 2 has an input engaging portion 4. The input engaging portion 4 extends radially and circumferentially about a portion of the input shaft 2 and is fixedly coupled to the input shaft 2.

The mechanical stop system 1 has a plurality of rotating members 6. Each of the plurality of rotating members 6 is arranged to rotate about the input shaft 2. Each of the plurality of rotating members 6 is spaced axially along the input shaft 2 and arranged flush to at least one respective adjacent rotating member 6. The plurality of rotating members 6 has a proximal rotating member 8, a distal rotating member 10 and at least one intermediate member 12. The proximal rotating member 8 is the rotating member 6 arranged proximal to the input engaging portion 4. The distal rotating member 10 is the rotating member 6 arranged distal from the input engaging portion 4. Each of the plurality of rotating members 6 has a first distance.

Each of the plurality of rotating members 6 has a substantially annular cross section (e.g. cylindrical in shape), orthogonal to the longitudinal axis A-B. The first distance is the axial length (e.g. the distance in the direction parallel to the longitudinal axis A-B) over which each of the plurality of rotating member 6 extends.

Each of the plurality of rotating members 6 has an engaging portion 7. The engaging portion 7 extends from the respective rotating member 6. The engaging portion 7 extends circumferentially about the longitudinal axis A-B over a first dimension. The engaging portion 7 projects over a second distance parallel to the longitudinal axis in a proximal direction (e.g. parallel to the direction from B to A) and a distal direction (e.g. parallel to the direction from A to B). The second distance is approximately twice the first distance.

The engaging portion 7 overlaps with the engaging portion 7 of a respective adjacent rotating member 6 by a length of approximately the first distance. The engaging portion 7 is arranged to overlap with the engaging portion 7 of a respective adjacent rotating member 6. The engaging portion 7 projects a distance of approximately half the first distance in the proximal direction. The engaging portion 7 projects a distance of approximately half the first distance in the distal direction. The input engaging portion 4 is arranged to axially overlap with the engaging portion 7 of the proximal rotating member 8.

The mechanical stop system 1 has a fixed member 14. The fixed member 14 is arranged circumferential to the input shaft 2. The fixed member 14 overlaps axially with the engaging portion 7 of the distal rotating member 10.

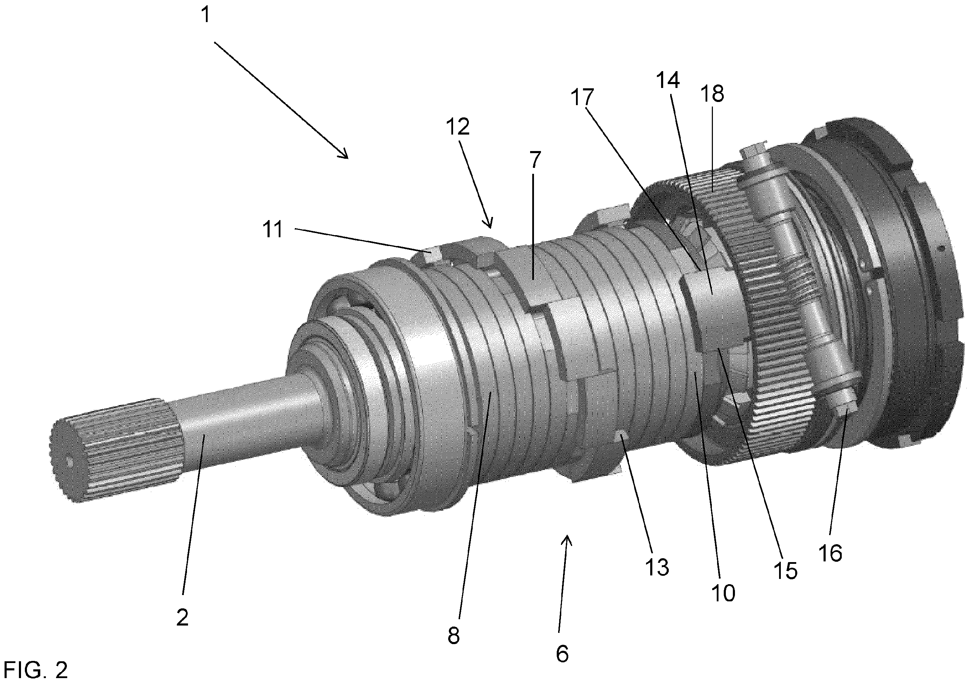

Figure 2 shows a perspective view of the mechanical stop system 1.

The mechanical stop system 1 has a fixed member 14 and a regulating member 16. The fixed member 14 is coupled to a movable member 18. The regulating member 16 and the movable member 18 are a worm gear arrangement wherein the regulating member 16 is the worm and the movable member 18 is the worm wheel. The regulating member 16 is arranged to adjust the position of the fixed member 14 via the movable member 18 in a direction circumferential to the longitudinal axis A-B. Rotation of the regulating member 18 is arranged to adjust the position of the fixed member 14 in a direction circumferential to the longitudinal axis A-B.

The engaging portion 7 has a first abutting surface 11 and a second abutting surface 13 arranged on circumferentially opposite ends of the engaging portion 7 of each respective rotating member 6. The first abutting face 11 and the second abutting face 13 are arranged to engage with the respective opposite abutting face (e.g. the first abutting face 11 of a rotating member engages with the second abutting face 13 of an adjacent rotating member 6 and vice versa) of an engaging portion 7 of a respective adjacent rotating member 6.

The fixed member 14 has a fifth abutting face 15 and a sixth abutting face 17 arranged to engage with the second abutting face 13 and the first abutting face 11 of the distal rotating member 10 respectively. The fifth abutting face 15 and the sixth abutting face 17 are separated circumferentially on the fixed member by a distance of a fifth dimension.

The operation of the mechanical stop system 1 will now be described with reference to Figure 1 and Figure 2.

The input shaft 2 is configured to rotate in a first direction (e.g. rotate clockwise when viewed along the longitudinal axis A-B from A). When the input shaft 2 rotates in the first direction the input engaging portion 4 rotates in the first direction. The input engaging portion 4 engages with the engaging portion 7 of the proximal rotating member 8, rotating the proximal rotating member 8 in the first direction.

The engaging portion 7 is arranged to engage with the engaging portion 7 of the respective adjacent rotating member 6 when the input shaft 2 rotates in the first direction. Each of the plurality of rotating members 6 rotates in the first direction when the engaging portion 7 of the rotating member 6 is engaged with the engaging portion 7 of a respective adjacent rotating member 6.

When the distal rotating member 10 is engaged to rotate in the first direction, the engaging portion 7 of the distal rotating member 10 engages with the fixed member 14. By arranging the input engaging portion 4 to engage with the proximal rotating member 8, the plurality of rotating members 6 to engage and rotate in the first direction, and the distal rotating member 10 to engage with the fixed member 14, further rotation of the input shaft 2 in the first direction is prevented.

The mechanical stop system 1 has a first operating limit and a second operating limit. The first operating limit is the maximum rotation in the first direction through which the input shaft 2 rotates before the distal rotating member 10 engages with the fixed member 14. The second operating limit is the maximum rotation in the second direction through which the input shaft 2 rotates before the distal rotating member 10 engages with the fixed member 14.

The first operating limit and the second operating limit may be varied in a several ways.

By using the regulating member 16 to vary the circumferential position of the fixed member 14 about the longitudinal axis (e.g. in the first direction or the second direction), the first operating limit and the second operating limit may be varied. By varying the number of rotating members 6, the first threshold rotation and the second threshold rotation may vary.

By setting the circumferential length of the engaging portion on (e.g. each of) the plurality of rotating members, the distance over which (e.g. each of) the plurality of rotating members 6 in the first direction or the second direction rotates before engaging with an adjacent rotating member 6 may be set. By setting the distance over which (e.g. each of) the plurality of rotating members 6 in the first direction and the second direction before engaging with an adjacent rotating member 6, the first operating limit and the second operating limit may be varied.

When the input shaft 2 rotates in the first direction and the first operating limit is reached, the input shaft 2 is arranged to rotate in the second direction towards the second operating limit. The input shaft 2 may rotate in the second direction until the mechanical stop system 1 reaches the second operating limit. Alternatively, the input shaft 2 may rotate an amount in the second direction less than the second operating limit.

Similarly, when the input shaft rotates in the second direction and the second operating limit it reached, the input shaft 2 is arranged to rotate in the first direction towards the first operating limit. The input shaft 2 may rotate in the first direction until the mechanical stop system 1 reaches the first operating limit. Alternatively, the input shaft 2 may rotate an amount in the first direction less than the first operating limit. The mechanical stop system 1 may provide the limits between which the input shaft 2 can rotate.

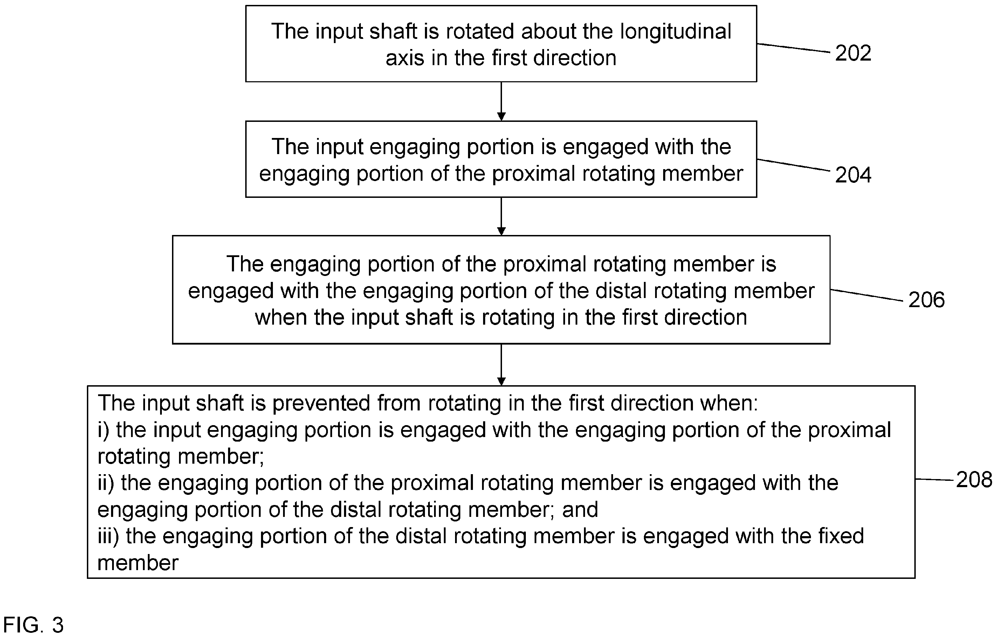

Figure 3 shows a method of operating the mechanical stop system 1 of Figure 1 and Figure 2.

The method begins at step 202. At step 202, the input shaft 2 is rotated about the longitudinal axis A-B in the first direction.

At step 204, the input engaging portion 4 is engaged with the engaging portion 7 of the proximal rotating member 8.

At step 206, the engaging portion 7 of the proximal rotating member 8 is engaged with the engaging portion 7 of the distal rotating member 10 when the input shaft 2 is rotating in the first direction.

At step 208, the input shaft 2 is prevented from rotating in the first direction when:
i. the input engaging portion 4 is engaged with the engaging portion 7 of the proximal rotating member 8;
ii. the engaging portion 7 of the proximal rotating member 8 is engaged with the engaging portion 7 of the distal rotating member 10; and
iii. the engaging portion 7 of the distal rotating member 10 is engaged with the fixed member 14.

Alternatively, at step 202, the input shaft 2 may be rotated about the longitudinal axis A-B in the second direction. When the input shaft 2 is rotating in the second direction, at step 206, the engaging portion 7 of the proximal rotating member 8 is engaged with the engaging portion 7 of the distal rotating member 10. When the input shaft 2 is rotating in the second direction, at step 208, the input shaft 2 is prevented from rotating in the second direction when:
i. the input engaging portion 4 is engaged with the engaging portion 7 of the proximal rotating member 8;
ii. the engaging portion 7 of the proximal rotating member 8 is engaged with the engaging portion 7 of the distal rotating member 10; and
iii. the engaging portion 7 of the distal rotating member 10 is engaged with the fixed member 14.

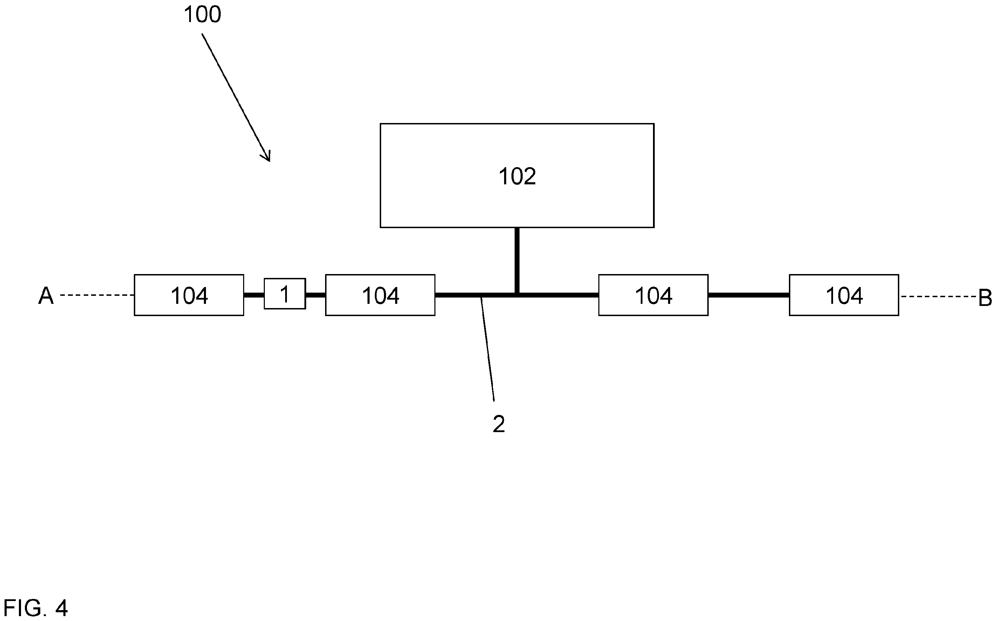

Figure 4 shows a schematic of a power delivery system 100. Similar features in the mechanical stop system 1 shown in Figure 1 and Figure 2 are shown with the same reference numerals.

The power delivery system 100 has a power delivery unit 102 arranged to drive an input shaft 2 of the power delivery system 100 in the first direction or the second direction. The power delivery system 100 has at least one actuator 104. The input shaft 2 is arranged to actuate the at least one actuator 104. The at least one actuator 104 is arranged to actuate at least one component of an aircraft steering system (not-shown). The at least one component of an aircraft steering system may be any number of flaps, ailerons, elevators, rudder movable surfaces in any combination.

The power delivery system 100 has a mechanical stop system 1 arranged on the input shaft 2. The mechanical stop system 1 acts to prevent the input shaft 2 rotating beyond a set of operating limits (e.g. a first operating limit in a first direction and a second operating limit in a second direction). By preventing the input shaft 2 from rotating beyond the set of operating limits, the at least one actuator 104 is also prevented from rotating beyond the set of operating limits, therefore the mechanical stop system 1 may act as a stop for the delivery of power to the at least one actuator 104.

The at least one actuator 104 has a third operating limit and a fourth operating limit. The third operating limit is the position of the at least one actuator 104 when the mechanical stop system 1 prevents rotation of the input shaft 2 in the first direction. The fourth operating limit is the position of the at least one actuator 104 when the mechanical stop system 1 prevents rotation of the input shaft 2 in the second direction. The at least one actuator 104 is arranged to be actuated between the third operating limit and the fourth operating limit.

By arranging the mechanical stop system 1 on the input shaft 2, the mechanical stop system 1 may act to stop the delivery of power from the power delivery unit 102 to the at least one actuator 104 on the low torque side of the power delivery system 100. By arranging the mechanical stop system 1 on the low torque side of the power delivery system 100, the mechanical stop system 1 may have improved longevity with respect to wear over time.

Adjustment of the position of the fixed member 14 in the mechanical stop system 1 may adjust the operating limits (e.g. the third operating limit or the fourth operating limit) of all of the at least one actuator 104. The mechanical stop system 1 may provide a means for global adjustment of the at least one actuator 104 as adjustment of the operating limits (e.g. the third operating limit or the fourth operating limit) of the mechanical stop system 1 may adjust the operating limits of all of the at least one actuator 104 in the power delivery system 100.

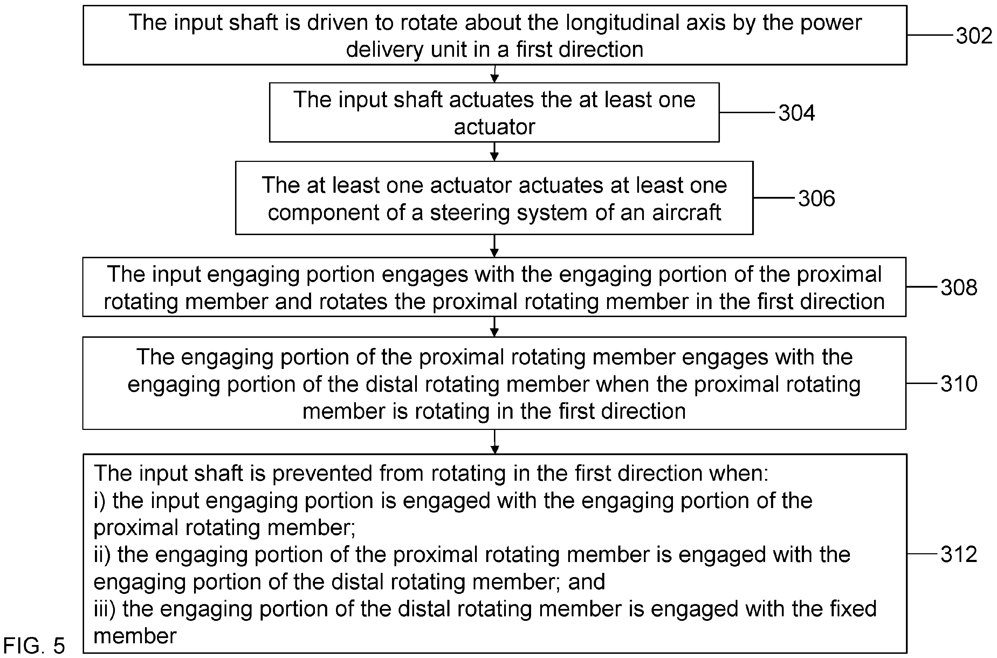

Figure 5 shows a method of operating the power delivery system 100 of Figure 4.

The method begins at step 302. At step 302 the input shaft 2 is driven to rotate about the longitudinal axis A-B by the power delivery unit 102 in a first direction.

At step 304, the input shaft 2 actuates the at least one actuator 104.

At step 306, the at least one actuator 104 actuates at least one component of a steering system of an aircraft.

At step 308, the input engaging portion engages with the engaging portion of the proximal rotating member and rotates the proximal rotating member in the first direction.

At step 310, the engaging portion of the proximal rotating member engages with the engaging portion of the distal rotating member when the proximal rotating member is rotating in the first direction.

At step 312, the input shaft 2 is prevented from rotating in the first direction when:
i. the input engaging portion is engaged with the engaging portion of the proximal rotating member;
ii. the engaging portion of the proximal rotating member is engaged with the engaging portion of the distal rotating member; and
iii. the engaging portion of the distal rotating member is engaged with the fixed member.

Alternatively, at step 302, the input shaft 2 may be driven to rotate about the longitudinal axis A-B by the power delivery unit 102 in a second direction. When the input shaft 2 is rotating in the second direction, at step 304, the input shaft 2 actuates the at least one actuator 104. When the input shaft 2 is rotating in the second direction, at step 306, the at least one actuator 104 actuates at least one component of a steering system of an aircraft. When the input shaft 2 is rotating in the second direction, at step 308, the input engaging portion engages with the engaging portion of the proximal rotating member and rotates the proximal rotating member in the second direction. When the input shaft 2 is rotating in the second direction, at step 310, the engaging portion of the proximal rotating member engages with the engaging portion of the distal rotating member. When the input shaft 2 is rotating in the second direction, at step 312, the input shaft 2 is prevented from rotating in the second direction when:
i. the input engaging portion is engaged with the engaging portion of the proximal rotating member;
ii. the engaging portion of the proximal rotating member is engaged with the engaging portion of the distal rotating member; and
iii. the engaging portion of the distal rotating member is engaged with the fixed member.

## Claims

1. A mechanical stop system of a power delivery system in an aircraft, wherein the mechanical stop system comprises:
an input shaft;
wherein the input shaft is arranged to rotate about a longitudinal axis;
wherein the input shaft comprises an input engaging portion;
wherein the input engaging portion extends radially from the input shaft;
wherein the mechanical stop system further comprises:
a plurality of rotating members;
wherein each of the plurality of rotating members is arranged to rotate about the input shaft;
wherein the plurality of rotating members are axially spaced along the input shaft;
wherein the plurality of rotating members comprises:
a proximal rotating member arranged proximal to the input engaging portion;
a distal rotating member arranged distal from the input engaging portion;
wherein each of the plurality of rotating members comprises:
an engaging portion;
wherein the engaging portion extends radially from the rotating member;
wherein the engaging portion of the rotating member is arranged to axially overlap with the engaging portion of a respective adjacent rotating member;
wherein the mechanical stop system further comprises:
a fixed member;
wherein the fixed member is arranged distal from the input engaging portion;
wherein the fixed member is arranged to axially overlap with the engaging portion of the distal rotating member;
wherein the input engaging portion is arranged to engage with the engaging portion of the proximal rotating member and rotate the proximal rotating member in a first direction, when the input shaft rotates in the first direction;
wherein the engaging portion of the proximal rotating member is arranged to engage with the engaging portion of the distal rotating member, when the proximal rotating member rotates in the first direction;
wherein the input shaft is arranged to be prevented from rotating in the first direction when:
i. the input engaging portion is engaged with the engaging portion of the proximal rotating member;
ii. the engaging portion of the proximal rotating member is engaged with the engaging portion of the distal rotating member; and
iii. the engaging portion of the distal rotating member is engaged with the fixed member.

2. The mechanical stop system as claimed in claim 1, wherein the plurality of rotating members comprises at least one intermediate rotating member;
wherein the at least one intermediate rotating member is axially between the proximal rotating member and the distal rotating member.

3. The mechanical stop system as claimed in either of claim 1 or 2, wherein each of the plurality of rotating members has a substantially annular cross section, orthogonal to the longitudinal axis;
wherein each of the plurality of rotating members is coaxial with the longitudinal axis.

4. The mechanical stop system as claimed in any preceding claim, wherein each of the plurality of rotating members has a first distance;
wherein the first distance is the axial length that each of the plurality of rotating members extends.

5. The mechanical stop system as claimed in claim 4, wherein the engaging portion extends over a first dimension in a direction circumferential to the longitudinal axis; and
wherein the engaging extends over a second distance in a direction parallel to the longitudinal axis.

6. The mechanical stop system as claimed in claim 4 or 5, wherein the engaging portion overlaps axially with the engaging portion of a respective adjacent rotating member by a distance of approximately the first distance.

7. The mechanical stop system of any preceding claim, wherein the engaging portion comprises a first abutting face and a second abutting face;
wherein the first abutting face is substantially planar and the second abutting face is substantially planar;
wherein the first abutting face extends in a radial direction and an axial direction from the longitudinal axis and the second abutting face extends in a radial direction and an axial direction from the longitudinal axis; and
wherein the first abutting face and the second abutting face are arranged at circumferentially opposite ends of the engaging portion.

8. The mechanical stop system of any preceding claim, wherein the input engaging portion comprises a third abutting face and a fourth abutting face;
wherein the third abutting face is substantially planar and the fourth abutting face is substantially planar;
wherein the third abutting face extends in a radial direction and an axial direction from the longitudinal axis and the fourth abutting face extends in a radial direction and an axial direction from the longitudinal axis; and
wherein the third abutting face and the fourth abutting face are arranged at circumferentially opposite ends of the input engaging portion.

9. The mechanical stop system of any preceding claim, wherein the fixed member comprises a fifth abutting face and a sixth abutting face;
wherein the fifth abutting face is substantially planar and the sixth abutting face is substantially planar;
wherein the fifth abutting face extends in a radial direction and an axial direction from the longitudinal axis and the sixth abutting face extends in a radial direction and an axial direction from the longitudinal axis; and
wherein the fifth abutting face and the sixth abutting face are arranged at circumferentially opposite ends of the input engaging portion.

10. The mechanical stop system of any preceding claim, wherein the input shaft is arranged to rotate in a second direction about the longitudinal axis;
wherein the second direction is opposite to the first direction.

11. The mechanical stop system as claimed in claim 10, wherein the engaging portion of the proximal rotating member is arranged to engage with the engaging portion of the distal rotating member when the proximal rotating member rotates in the second direction.

12. The mechanical stop system as claimed in claim 12, wherein the input shaft is arranged to be prevented from rotating in the second direction when:
iv. the input engaging portion is engaged with the engaging portion of the proximal rotating member;
v. the engaging portion of the proximal rotating member is engaged with the engaging portion of the distal rotating member; and
vi. the engaging portion of the distal rotating member is engaged with the fixed member.

13. The mechanical stop system of any preceding claim, wherein the fixed member is coupled to a regulating component;
wherein the regulating component is arranged to vary the position of the fixed member is a direction circumferential to the input shaft;
wherein the regulating component comprises a regulating member and a movable member;
wherein the movable member is fixedly coupled to the fixed member;
wherein the regulating member and the movable member engage in a worm gear arrangement;
wherein the movable member is a worm wheel; and
wherein the regulating member is a worm.

14. A method of operating a mechanical stop system of a power delivery system of an aircraft, the mechanical stop system comprising:
an input shaft;
wherein the input shaft is arranged to rotate about a longitudinal axis;
wherein the input shaft comprises an input engaging portion;
wherein the input engaging portion extends radially from the input shaft;
wherein the mechanical stop system further comprises:
a plurality of rotating members;
wherein each of the plurality of rotating members is arranged to rotate about the input shaft;
wherein the plurality of rotating members are axially spaced along the input shaft;
wherein the plurality of rotating members comprises:
a proximal rotating member arranged proximal to the input engaging portion;
a distal rotating member arranged distal from the input engaging portion;
wherein each of the plurality of rotating members comprises:
an engaging portion;
wherein the engaging portion extends radially from the rotating member;
wherein the engaging portion of the rotating member is arranged to axially overlap with the engaging portion of a respective adjacent rotating member;
wherein the mechanical stop system further comprises:
a fixed member;
wherein the fixed member is arranged distal from the input engaging portion;
wherein the fixed member is arranged to axially overlap with the engaging portion of the distal rotating member;
wherein the method comprises:
rotating the input shaft about the longitudinal axis in a first direction;
engaging the input engaging portion with the engaging portion of the proximal rotating member and rotating the proximal rotating member in the first direction;
engaging the engaging portion of the proximal rotating member with the engaging portion of the distal rotating member, when the proximal rotating member is rotating in the first direction;
preventing the input shaft from rotating in the first direction when:
i. the input engaging portion is engaged with the engaging portion of the proximal rotating member;
ii. the engaging portion of the proximal rotating member is engaged with the engaging portion of the distal rotating member; and
iii. the engaging portion of the distal rotating member is engaged with the fixed member.

15. A power delivery system of an aircraft, wherein the power delivery system comprises:
a power drive unit;
wherein the power drive unit is arranged to drive an input shaft;
wherein the input shaft is arranged to rotate about a longitudinal axis;
at least one actuator;
wherein the input shaft is arranged to actuate the at least one actuator;
wherein the at least one actuator is arranged to actuate at least one component of a steering system of the aircraft; and
the mechanical stop system of any one of claims 1 to 13.
